# EUROPÄISCHE PATENTSCHRIFT

(11) **EP 4 294 700 B1**
(45) Veröffentlichungstag und Bekanntmachung des Hinweises auf die Patenterteilung: **21.01.2026**
(21) Anmeldenummer: 21794775.3
(22) Anmeldetag: 14.10.2021
(51) Int. Cl.: B62D 5/00, B62D 15/02

(54) **DREHWINKELSENSORANORDNUNG UND LENKSYSTEM FÜR EIN FAHRZEUG**
ROTATIONAL ANGLE SENSOR ASSEMBLY AND STEERING SYSTEM FOR A VEHICLE
ENSEMBLE CAPTEUR D'ANGLE DE ROTATION ET SYSTÈME DE DIRECTION POUR VÉHICULE

(30) Priorität: 22.02.2021 DE 102021104100
(43) Veröffentlichungstag der Anmeldung: 27.12.2023
(73) Patentinhaber: HELLA GmbH & Co. KGaA, 59552 Lippstadt (DE)
(72) Erfinder: IRLE, Henning, 59557 Lippstadt (DE); FORST, Sebastian, 59174 Kamen (DE)
(74) Vertreter: Behr-Wenning, Gregor
(86) Internationale Anmeldenummer: PCT/EP2021/078498
(87) Internationale Veröffentlichungsnummer: WO 2022/174942

(56) Entgegenhaltungen:
- DE-A1- 10 348 914
- DE-A1- 102008 045 195
- DE-A1- 102010 030 801
- DE-A1- 102014 212 498
- DE-A1- 102015 202 733
- JP-A- H11 211 456
- KR-B1- 100 802 664
- US-A1- 2020 070 871
- US-B2- 8 004 277

## Beschreibung

Die vorliegende Erfindung bezieht sich auf ein Lenksystem für ein Fahrzeug der im Oberbegriff des Anspruchs 1 genannten Art.

Derartige Lenksysteme für Fahrzeuge sind aus dem Stand der Technik in zahlreichen Ausführungsvarianten bereits bekannt. Die bekannten Drehwinkelsensoranordnungen zur Bestimmung eines Drehwinkels einer Welle bei einer Drehung der Welle um eine Drehachse der Welle umfassen dabei unter anderem einen mit der Welle in Kraftübertragungsverbindung stehenden Umdrehungsgeber und einen Umdrehungssensor zur Detektion einer Bewegung des Umdrehungsgebers. Die bekannten Lenksysteme für Fahrzeuge umfassen eine starre Lenksäule, eine Steuerung, ein an der Lenksäule mittels einer Welle drehbar angeordnetes Lenkrad, wobei die oben genannte und mit der Steuerung signalübertragend verbundene Drehwinkelsensoranordnung zur Bestimmung eines Drehwinkels der Welle bei einer Drehung der Welle um eine Drehachse der Welle ausgebildet ist, wobei die Drehwinkelsensoranordnung einen mit der Welle in Kraftübertragungsverbindung stehenden Umdrehungsgeber und einen Umdrehungssensor zur Detektion einer Bewegung des Umdrehungsgebers umfasst, und wobei an der Welle ein drehfest angeordnetes erstes Getriebeteil eines Getriebes der Drehwinkelsensoranordnung angeordnet ist, der Umdrehungsgeber als ein mit dem ersten Getriebeteil in Eingriff befindliches zweites Getriebeteil des Getriebes ausgebildet ist und das Getriebe gleichzeitig an einem ersten Ende eines Drehwinkelbereichs der Welle bei einer Drehung der Welle im Gegenuhrzeigersinn und an einem zweiten Ende des Drehwinkelbereichs der Welle bei einer Drehung der Welle im Uhrzeigersinn jeweils einen festen mechanischen Anschlag der Welle ausbildet.

Siehe hierzu beispielsweise die JP H11 211 456 A und die KR 100 802 664 B1 aus denen derartige Lenksysteme mit Drehwinkelsensoranordnungen gemäß den Oberbegriff des Anspruchs 1 bekannt sind.

Ferner sei auf die folgenden Druckschriften hingewiesen: DE 103 48 914 A1, US 8 004 277 B2, DE 10 2014 212 498 A1, DE 10 2015 202 733 A1, US 2020 070 871 A1 und DE 10 2008 045 195 A1.

Hier setzt die vorliegende Erfindung an.

Der vorliegenden Erfindung liegt die Aufgabe zugrunde, ein mit einer Drehwinkelsensoranordnung ausgerüstetes Lenksystem für ein Fahrzeug zu verbessern.

Diese Aufgabe wird durch ein Lenksystem mit den Merkmalen des Anspruchs 1 gelöst, das dadurch gekennzeichnet ist, dass das Lenkrad (4) an der Lenksäule mittels eines Lenkradaktors und der Welle (8) drehbar angeordnet ist, wobei der mit der Steuerung signalübertragend verbundene und einen Außenläufer-Elektromotor aufweisende Lenkradaktor an der Lenksäule starr befestigt und mittels der Welle (8) mit dem Lenkrad (4) drehmomentübertragend verbunden ist, und wobei die mit der Steuerung signalübertragend verbundene Drehwinkelsensoranordnung (6) zur Bestimmung eines Drehwinkels der mit dem Lenkrad (4) drehfest und mit dem Lenkradaktor drehmomentübertragend verbundenen Welle (8) bei einer Drehung der Welle (8) um eine Drehachse (10) der Welle (8) ferner einen mit der Welle (8) drehfest verbundenen Drehwinkelgeber (20) und einen zu dem Drehwinkelgeber (20) korrespondierenden Drehwinkelsensor zur Erfassung von Drehungen der Welle (8) um die Drehachse (10) in einem Drehwinkelbereich von unter -/+ 360° aufweist, wobei der Drehwinkelgeber (20) und der Drehwinkelsensor zusätzlich zur Erfassung der Drehposition des Außenläufers des Elektromotors relativ zu der starren Lenksäule ausgebildet sind. Die Unteransprüche betreffen vorteilhafte Weiterbildungen der Erfindung.

Ein wesentlicher Vorteil der Erfindung liegt insbesondere darin, dass ein mit einer Drehwinkelsensoranordnung ausgerüstetes Lenksystem für ein Fahrzeug verbessert ist. Aufgrund der erfindungsgemäßen Ausbildung des Lenksystems für ein Fahrzeug ist der Aufbau des Lenksystems für ein Fahrzeug wesentlich vereinfacht. Das Getriebe dient bei dem erfindungsgemäßen Lenkwinkelsystem zum einen als fester mechanischer Anschlag der Welle bei der Drehung der Welle im Gegenuhrzeigersinn und im Uhrzeigersinn um deren Drehachse, so dass ein Überdrehen der Welle, beispielsweise ein Überlenken des Lenkrads des Lenksystems, wirksam und sicher verhindert ist. Zum anderen dient das Getriebe gleichzeitig zur Detektion einer teilweisen und/oder einer ganzen und/oder einer mehrmaligen Umdrehung der Welle und damit des Lenkrads des Lenksystems. Hierdurch ist eine platzsparende und bauteilsparende sowie konstruktions- und fertigungsfreundliche Bauweise des mit einer Drehwinkelsensoranordnung ausgestatteten Lenksystems für ein Fahrzeug ermöglicht.

Auf diese Weise ist ferner die Funktionalität des Drehwinkelgebers und des Drehwinkelsensors erhöht. Die Erfassung der Drehposition des Außenläufers des Elektromotors relativ zu der starren Lenksäule ist beispielsweise nötig, wenn Asymmetrien im Motor oder in der Sensorik über einen Drehwinkelbereich von mehr als -/+360° kompensiert werden müssen. Eine solche Kompensation wird in der Regelung zweckmäßig mittels einer Look-up-Tabelle ausgeführt. Winkel zwischen den Stützstellen der vorgenannten Tabelle werden beispielsweise mathematisch durch Interpolation berechnet.

Die Kompensation über die vollen -/+360° ist insofern wichtig, als dass sich viele der mechanischen Toleranz-Effekte und Asymmetrien eben erst über die vollen -/+360° erkennen und somit kompensieren lassen. Selbstverständlich können sich auch Asymmetrien mit einer Periode über -/+180° oder kleinerer Teilungen von -/+360° ausbilden, die in solchen Fällen nach gleichem Schema zu korrigieren sind.

Grundsätzlich ist die Drehwinkelsensoranordnung des erfindungsgemäßen Lenksystems nach Art, Funktionsweise, Material und Dimensionierung in weiten geeigneten Grenzen frei wählbar.

Eine vorteilhafte Weiterbildung der erfindungsgemäßen Lenksystems sieht vor, dass die Drehwinkelsensoranordnung zur Bestimmung von einer Mehrzahl von 360°-Umdrehungen einer Welle ausgebildet ist, wobei die Welle in einem Drehwinkelbereich von -n*360° bis +n*360° um die Drehachse der Welle drehbar ist und das Getriebe gleichzeitig bei einem Drehwinkel von -n*360° und bei einem Drehwinkel von +n*360° jeweils einen der festen mechanischen Anschläge der Welle ausbildet. Auf diese Weise ist der Anwendungsbereich der Drehwinkelsensoranordnung wesentlich erweitert. Beispielsweise ist dies bei Nutzfahrzeugen wie Lastkraftwagen oder dergleichen von Vorteil, bei denen in der Regel eine Mehrfachumdrehung des Lenkrads bei der Steuerung des Fahrzeugs erforderlich ist. Bei n kann es sich dabei um eine natürliche Zahl handeln. Dies ist jedoch nicht zwingend erforderlich. Entsprechend wären auch Drehwinkelbereiche vorstellbar, bei denen der Drehwinkelbereich bei einer Drehung der Welle im Gegenuhrzeigersinn und Uhrzeigersinn, ausgehend von 0°, jeweils mit einer unvollständigen Umdrehung endet.

Eine weitere vorteilhafte Weiterbildung der Drehwinkelsensoranordnung des erfindungsgemäßen Lenksystems sieht vor, dass das erste Getriebeteil als ein integraler Bestandteil der Welle ausgebildet ist, bevorzugt, dass das erste Getriebeteil als eine gewindeartige Nut in der Welle und das zweite Getriebeteil als ein in der gewindeartigen Nut geführter Nutenstein ausgebildet sind. Hierdurch ist das Getriebe auf konstruktiv und fertigungstechnisch besonders einfache und robuste Art und Weise realisierbar. Dies gilt insbesondere für die bevorzugte Ausführungsform dieser Weiterbildung.

Eine besonders vorteilhafte Weiterbildung der Drehwinkelsensoranordnung des erfindungsgemäßen Lenksystems sieht vor, dass der Drehwinkelgeber an einer freien Stirnseite der Welle angeordnet ist, bevorzugt, dass der Drehwinkelgeber als ein integraler Bestandteil der Welle ausgebildet ist. Auf diese Weise ist beispielsweise ein sogenanntes Grob-Fein-Spurverfahren mittels des Umdrehungsgebers und des Umdrehungssensors auf der einen Seite und mittels des Drehwinkelgebers und des Drehwinkelsensors auf der anderen Seite möglich. Denkbar ist aber insbesondere auch die Anwendung des sogenannten Nonius-Verfahrens.

Eine vorteilhafte Weiterbildung der vorgenannten Ausführungsform der Drehwinkelsensoranordnung des erfindungsgemäßen Lenksystems sieht vor, dass der Drehwinkelgeber und der Drehwinkelsensor zusätzlich zur Erfassung von Drehungen der Welle um die Drehachse in einem Drehwinkelbereich von größer -/+360°, bevorzugt von -/+n*360°, geeignet ausgebildet sind. Hierdurch ist es beispielsweise ausreichend, sofern bei einem Fahrzeug der Drehwinkelbereich des Lenkrads auf zum Beispiel weniger als zwei Umdrehungen reduziert wird, mittels des Umdrehungsgebers und des Umdrehungssensors lediglich zwei Schaltzustände zu erfassen.

Entsprechend ist es in diesem oder ähnlich gelagerten Fällen nicht erforderlich, dass der Umdrehungsgeber und der Umdrehungssensor den Drehwinkel mit einer hohen Auflösung detektieren. Stattdessen können der Umdrehungsgeber und der Umdrehungssensor auch lediglich dazu ausgebildet sein, als ein Zähler mit einer eingeschränkten und überschaubaren Anzahl an Schaltstellungen zu funktionieren. Der Umdrehungssensor kann beispielsweise kapazitiv, induktiv oder optisch (zum Beispiel als Lichtschranke) realisiert sein. Derartige Systeme werden auch als Annäherungsschalter bezeichnet.

Beispielsweise kann ein solcher Zähler bei einer Lenkung, die einen Drehwinkelbereich von -350° bis +350° besitzt, so ausgestaltet werden, dass für nominal einen Bereich von -350° bis 0° eine Metallfläche (Verdunkelungs- oder Reflexionsfläche bei optischen Sensoren) unter/vor dem Annäherungsschalter wirkt und nominal im Bereich von 0° bis +350° eine solche Wirkung nicht gegeben ist. Mit anderen Worten ist so ein Schalter realisiert, der bei 0°, was dem geradeauslauf des Fahrzeugs entsprechen soll, schaltet. Ein Einschlagen des Lenkrads nach links oder rechts, also eine Drehung der Welle im Gegenuhrzeigersinn oder im Uhrzeigersinn, wird mittels des Schaltzustands eindeutig unterscheidbar.

Je nach Wahl des Schalters und dem genutzten physikalischen Grundprinzip (kapazitiv, induktiv, optisch) kann durch den Einsatz eines diversitären physikalischen Grundprinzips, ein Sicherheitsgewinn erzielt werden. Dies bedeutet, dass sich unterschiedliche physikalische Grundprinzipien in der Regel nicht durch ein und denselben Fehler oder durch ein und dieselbe Störung gleichzeitig beeinflussen lassen.

Ein weiterer Aspekt bei der Wahl einer diversitären Ausgestaltung kann die Minimierung von Übersprechen sein, sofern eine Bauraumintegration auf engem Raum gewünscht oder notwendig ist.

Diese Überlegungen zur Wahl von diversitären Grundprinzipien gelten in gleicher Weise für Umdrehungsgeber und Umdrehungssensoren und/oder Drehwinkelgeber und Drehwinkelsensoren mit jeweils höheren Auflösungen, als dies bei der Ausbildung als Schalter oder dergleichen der Fall ist.

Die Funktionalität bleibt, unabhängig davon, ob der Umdrehungsgeber und der Umdrehungssensor hochauflösend oder als ein Schalter, gegebenenfalls als Mehrstufenschalter, ausgebildet sind jeweils in Kombination mit dem Drehwinkelgeber und dem Drehwinkelsensor gleich, worauf die Wahl im jeweiligen Einzelfall aufgrund kommerzieller und bauraumintegrativer Betrachtungen sowie anhand von Überlegungen zur funktionalen Sicherheit zu treffen ist.

Eine andere vorteilhafte Weiterbildung der Drehwinkelsensoranordnung des erfindungsgemäßen Lenksystems sieht vor, dass der Umdrehungssensor und/oder der Drehwinkelsensor jeweils als ein induktiver Sensor ausgebildet sind/ist, bevorzugt, dass der Umdrehungssensor und/oder der Drehwinkelsensor jeweils eine Messfrequenz von größer 1 MHz aufweisen/aufweist. Induktive Sensoren sind robust und auch unter erschwerten Einsatzbedingungen, wie beispielsweise bei Fahrzeugen, sehr zuverlässig. Dies gilt insbesondere für die bevorzugte Ausführungsform dieser Weiterbildung. Aufgrund der bevorzugten Ausführungsform ist ein parasitäres Übersprechen der Motorströme oder auch durch Permanentmagnete wirksam verhindert. Ohne weitere Abschirmmaßnahmen des Umdrehungssensors und/oder des Drehwinkelsensors gelingt es so, die im automobilen Umfeld bekannten Prüfungen zur Elektromagnetischen Verträglichkeit (EMV) bezüglich Einstrahlfestigkeit und Abstrahlung einzuhalten.

Grundsätzlich ist das erfindungsgemäße Lenksystem für ein Fahrzeug nach Art, Funktionsweise, Material und Dimensionierung in weiten geeigneten Grenzen frei wählbar. Insbesondere kann das erfindungsgemäße Lenksystem bei sogenannten Steer-By-Wire Fahrzeugen mit Vorteil eingesetzt werden.

Eine weitere vorteilhafte Weiterbildung des erfindungsgemäßen Lenksystems sieht vor, dass die Erfassung der Drehposition auf eine Polpaar-Teilung des Elektromotors abgestimmt ausgebildet und eingerichtet ist. Auf diese Weise ist die erfindungsgemäße Erhöhung der Funktionalität des Drehwinkelgebers und des Drehwinkelsensors besonders vorteilhaft erzielt.

Eine andere vorteilhafte Weiterbildung des erfindungsgemäßen Lenksystems sieht vor, dass der Drehwinkelsensor auf einer an der Lenksäule befestigten Leiterplatte angeordnet ist und die Welle mit dem Drehwinkelgeber durch eine Öffnung in der Leiterplatte hindurchragt. Hierdurch ist es beispielsweise möglich, den Drehwinkelsensor relativ zu dem Außenläufer-Elektromotor sehr platzsparend anzuordnen, da bei Außenläufer-Elektromotoren ein ring- oder segmentförmiger Sensor bauraumtechnisch sehr gut untergebracht werden kann. So sind derartige Drehwinkelsensoren beispielsweise als ein Ring oder als ein Segment eines Rings aufgebaut.

Anhand der beigefügten, grob schematischen Zeichnung wird die Erfindung nachfolgend näher erläutert. Dabei zeigt die einzige Figur:

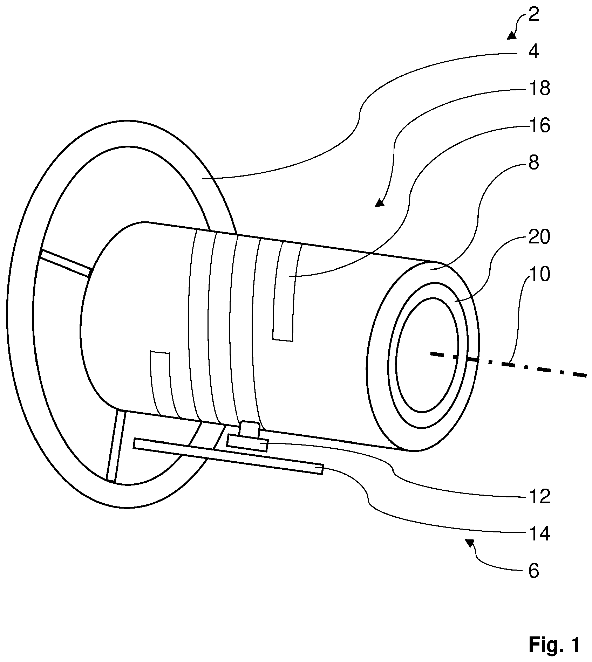

- Fig. 1: ein Ausführungsbeispiel des erfindungsgemäßen Lenksystems für ein Fahrzeug mit der Drehwinkelsensoranordnung in einer teilweisen perspektivischen Ansicht.

In der Fig. 1 ist ein Ausführungsbeispiel des erfindungsgemäßen Lenksystems für ein Fahrzeug mit der Drehwinkelsensoranordnung rein exemplarisch dargestellt.

Das Fahrzeug ist in der Fig. 1 nicht näher dargestellt. Das Lenksystem 2 ist als ein sogenanntes Steer-by-Wire System ausgebildet und umfasst eine starre Lenksäule, eine Steuerung, ein an der Lenksäule mittels eines Lenkradaktors und einer Welle 8 drehbar angeordnetes Lenkrad 4, wobei der mit der Steuerung signalübertragend verbundene und einen Außenläufer-Elektromotor aufweisende Lenkradaktor an der Lenksäule starr befestigt und mittels der Welle 8 mit dem Lenkrad 4 drehmomentübertragend verbunden ist. Ferner umfasst das Lenksystem 2 eine mit der Steuerung signalübertragend verbundene Drehwinkelsensoranordnung 6 zur Bestimmung eines Drehwinkels der mit dem Lenkrad 4 drehfest und mit dem Lenkradaktor drehmomentübertragend verbundenen Welle 8 bei einer Drehung der Welle 8 um eine Drehachse 10 der Welle 8. Die Lenksäule, die Steuerung und der Lenkradaktor mit dem Außenläufer-Elektromotor sind in der Fig. 1 nicht dargestellt. Die Steuerung ist auf dem Fachmann an sich bekannte Art und Weise auf einer Leiterplatte des Lenksystems 2 angeordnet.

Die Drehwinkelsensoranordnung 6 zur Bestimmung des Drehwinkels der Welle 8 bei einer Drehung der Welle 8 um die Drehachse 10 der Welle 8 umfasst einen mit der Welle 8 in Kraftübertragungsverbindung stehenden Umdrehungsgeber 12 und einen Umdrehungssensor 14 zur Detektion einer Bewegung des Umdrehungsgebers 12, wobei erfindungsgemäß an der Welle 8 ein drehfest angeordnetes erstes Getriebeteil 16 eines Getriebes 18 der Drehwinkelsensoranordnung 6 angeordnet ist und der Umdrehungsgeber 12 als ein mit dem ersten Getriebeteil 16 in Eingriff befindliches zweites Getriebeteil des Getriebes 18 ausgebildet ist, und wobei das Getriebe 18 gleichzeitig an einem ersten Ende eines Drehwinkelbereichs der Welle 8 bei einer Drehung der Welle 8 im Gegenuhrzeigersinn und an einem zweiten Ende des Drehwinkelbereichs der Welle 8 bei einer Drehung der Welle 8 im Uhrzeigersinn jeweils einen festen mechanischen Anschlag der Welle 8 ausbildet.

Die Drehwinkelsensoranordnung 6 ist bei dem vorliegenden Ausführungsbeispiel zur Bestimmung von einer Mehrzahl von 360°-Umdrehungen der Welle 8 ausgebildet, wobei die Welle 8 in einem Drehwinkelbereich von -n*360° bis +n*360° um die Drehachse 10 der Welle 8 drehbar ist und das Getriebe 18 gleichzeitig bei einem Drehwinkel von -n*360° und bei einem Drehwinkel von +n*360° jeweils einen der festen mechanischen Anschläge der Welle 8 ausbildet. Die Vorzeichen "-" und "+" stehen im Anmeldungstext lediglich für eine mögliche Drehung der Welle 8 im Gegenuhrzeigersinn und im Uhrzeigersinn um deren Drehachse 10.

Das erste Getriebeteil 16 ist hier als ein integraler Bestandteil der Welle 8 ausgebildet, nämlich derart, dass das erste Getriebeteil 16 als eine gewindeartige Nut in der Welle 8 und das zweite Getriebeteil 12 als ein in der gewindeartigen Nut 16 geführter Nutenstein ausgebildet sind.

Die Drehwinkelsensoranordnung 6 weist bei dem vorliegenden Ausführungsbeispiel ferner einen mit der Welle 8 drehfest verbundenen Drehwinkelgeber 20 und einen zu dem Drehwinkelgeber 20 korrespondierenden Drehwinkelsensor zur Erfassung von Drehungen der Welle 8 um die Drehachse 10 in einem Drehwinkelbereich von unter - /+360° auf, wobei der Drehwinkelgeber 20 hier an einer freien Stirnseite der Welle 8 angeordnet ist, nämlich derart, dass der Drehwinkelgeber 20 als ein integraler Bestandteil der Welle 8 ausgebildet ist. Der Drehwinkelsensor ist hier nicht dargestellt und weist auf der ebenfalls nicht dargestellten Leiterplatte des Lenksystems 2 angeordnete Leiterbahnen auf.

Bei anderen Ausführungsformen der Erfindung können der Drehwinkelgeber und der Drehwinkelsensor zusätzlich zur Erfassung von Drehungen der Welle um die Drehachse in einem Drehwinkelbereich von größer -/+ 360°, bevorzugt, von -/+ n*360°, geeignet ausgebildet sein. Siehe hierzu auch die diesbezüglichen Ausführungen in der Beschreibungseinleitung.

Der Umdrehungssensor 14 und der Drehwinkelsensor sind bei dem vorliegenden Ausführungsbeispiel jeweils als ein induktiver Sensor ausgebildet, wobei der Umdrehungssensor 14 und der Drehwinkelsensor jeweils eine Messfrequenz von größer 1 MHz aufweisen. Grundsätzlich sind aber auch andere Sensorprinzipien, wie beispielsweise kapazitive oder optische Sensorik, denkbar. Siehe hierzu ebenfalls die entsprechenden Ausführungen in der Beschreibungseinleitung.

Bei dem vorliegenden Ausführungsbeispiel ist es darüber hinaus vorgesehen, dass der Drehwinkelgeber 20 und der Drehwinkelsensor zusätzlich zur Erfassung der Drehposition des Außenläufers des Elektromotors relativ zu der starren Lenksäule ausgebildet sind, nämlich derart, dass die Erfassung der Drehposition auf eine Polpaar-Teilung des Elektromotors abgestimmt ausgebildet und eingerichtet ist. Auch hierzu finden sich nähere Angaben in der Beschreibungseinleitung.

Im Nachfolgenden wird die Funktionsweise des erfindungsgemäßen Lenksystems für ein Fahrzeug mit der erfindungsgemäßen Drehwinkelsensoranordnung gemäß dem vorliegenden Ausführungsbeispiel anhand der Fig. 1 kurz erläutert.

Sobald ein nicht dargestellter Fahrer des Fahrzeugs an dem Lenkrad 4 des Lenksystems 2 dreht, wird die Welle 8 um deren Drehachse 10 ebenfalls gedreht. Da sich der als Kulissenstein ausgebildete Umdrehungsgeber 12 in Eingriff mit dem als Gewinde ausgebildeten ersten Getriebeteil 16 des Getriebes 18 befindet, wird der Umdrehungsgeber 12 mittels der Drehung der Welle 8 um deren Drehachse 10 in der Bildebene der Fig. 1, je nach Drehrichtung, von links nach rechts oder von rechts nach links bewegt. Die rotatorische Bewegung der Welle 8 wird bei dem vorliegenden Ausführungsbeispiel also in eine translatorische Bewegung des Umdrehungsgebers 12 umgewandelt. Da sich hierdurch die relative Lage des Umdrehungsgebers 12 zu dem Umdrehungssensor 14 ändert, kann die Änderung des Drehwinkels mittels des Umdrehungssensors 14 detektiert und zur weiteren Verarbeitung an die Steuerung weitergeleitet werden.

Mit der vorgenannten Drehung der Welle 8 um deren Drehachse 10 wird auch der in die aus der Fig. 1 ersichtlichen Stirnseite integrierte Drehwinkelgeber 20 um die Drehachse 10 gedreht. Entsprechend ändert sich auch dessen relative Lage zu dem Drehwinkelsensor, so dass die Änderung des Drehwinkels mittels des Drehwinkelsensors ebenfalls detektiert und zur weiteren Verarbeitung an die Steuerung weitergeleitet werden kann.

Auf die vorgenannte Art und Weise erzeugte Ausgangssignale des Umdrehungssensors 12 und des Drehwinkelsensors können beispielsweise nach einer der in der Beschreibungseinleitung genannten Methoden in der Steuerung in einen Drehwinkel der Welle 8 und damit des Lenkrads 4 des Lenksystems 2 umgewandelt werden.

Aufgrund der erfindungsgemäßen Ausbildung des Lenksystems 2 ist der Aufbau des Lenksystems 2 andererseits wesentlich vereinfacht. Dies insbesondere deshalb, weil das Getriebe 18 bei der Drehwinkelsensoranordnung 6 zum einen als fester mechanischer Anschlag der Welle 8 bei der Drehung der Welle 8 im Gegenuhrzeigersinn und im Uhrzeigersinn um deren Drehachse 10 dient und so ein Überdrehen der Welle 8, nämlich ein Überlenken des Lenkrads 4 des Lenksystems 2, wirksam und sicher verhindert. Zum anderen dient das Getriebe 18 gleichzeitig zur Detektion einer teilweisen und/oder einer ganzen und/oder einer mehrmaligen Umdrehung der Welle 8 und damit beispielsweise des Lenkrads 4 des Lenksystems 2. Hierdurch ist eine platzsparende und bauteilsparende sowie konstruktions- und fertigungsfreundliche Bauweise der Drehwinkelsensoranordnung 6 und des damit ausgestatteten Lenksystems 2 ermöglicht.

Die Erfindung ist nicht auf das vorliegende Ausführungsbeispiel begrenzt. Beispielsweise ist das erfindungsgemäße Lenksystem und die erfindungsgemäße Drehwinkelsensoranordnung auch bei anderen Arten von Fahrzeugen vorteilhaft einsetzbar.

Insbesondere ist die Erfindung nicht auf die vorgenannten konstruktiven und fertigungstechnischen Details beschränkt.

Beispielsweise kann anstelle des gewindeartigen ersten Gewindeteils der als zweites Gewindeteil ausgebildete Umdrehungsgeber, zum Beispiel der Nutenstein aus dem Ausführungsbeispiel, mittels des ersten Gewindeteils derart an der Welle geführt sein, dass sich der Umdrehungsgeber bei einer Drehung der Welle um deren Drehachse, bezogen auf die Drehachse, nicht translatorisch, sondern rotatorisch bewegt.

Im Unterschied zu dem bei dem vorliegenden Ausführungsbeispiel als sogenannter End-of-shaft Geber ausgebildeten Drehwinkelgeber 20 kann der Drehwinkelgeber in anderen Ausführungsformen der Erfindung als ein sogenannter Through-hole Geber ausgebildet sein. Entsprechend könnte der Drehwinkelsensor auf einer an der Lenksäule befestigten Leiterplatte angeordnet sein, wobei die Welle in diesem Fall mit dem Drehwinkelgeber durch eine Öffnung in der Leiterplatte hindurchragt.

### Bezugszeichenliste

- 2: Lenksystem
- 4: Lenkrad
- 6: Drehwinkelsensoranordnung
- 8: Welle
- 10: Drehachse der Welle 8
- 12: Umdrehungsgeber
- 14: Umdrehungssensor
- 16: Erstes Getriebeteil des Getriebes 18
- 18: Getriebe
- 20: Drehwinkelgeber

## Patentansprüche

1. Lenksystem (2) für ein Fahrzeug, umfassend eine starre Lenksäule, eine Steuerung, ein an der Lenksäule mittels einer Welle (8) drehbar angeordnetes Lenkrad (4), und eine mit der Steuerung signalübertragend verbundene Drehwinkelsensoranordnung (6) zur Bestimmung eines Drehwinkels der Welle (8) bei einer Drehung der Welle (8) um eine Drehachse (10) der Welle (8), wobei die Drehwinkelsensoranordnung (6) einen mit der Welle (8) in Kraftübertragungsverbindung stehenden Umdrehungsgeber (12) und einen Umdrehungssensor (14) zur Detektion einer Bewegung des Umdrehungsgebers (12) umfasst, und wobei an der Welle (8) ein drehfest angeordnetes erstes Getriebeteil (16) eines Getriebes (18) der Drehwinkelsensoranordnung (6) angeordnet ist und der Umdrehungsgeber (12) als ein mit dem ersten Getriebeteil (16) in Eingriff befindliches zweites Getriebeteil des Getriebes (18) ausgebildet ist, wobei das Getriebe (18) gleichzeitig an einem ersten Ende eines Drehwinkelbereichs der Welle (8) bei einer Drehung der Welle (8) im Gegenuhrzeigersinn und an einem zweiten Ende des Drehwinkelbereichs der Welle (8) bei einer Drehung der Welle (8) im Uhrzeigersinn jeweils einen festen mechanischen Anschlag der Welle (8) ausbildet, **dadurch gekennzeichnet,**
**dass** das Lenkrad (4) an der Lenksäule mittels eines Lenkradaktors und der Welle (8) drehbar angeordnet ist, wobei der mit der Steuerung signalübertragend verbundene und einen Außenläufer-Elektromotor aufweisende Lenkradaktor an der Lenksäule starr befestigt und mittels der Welle (8) mit dem Lenkrad (4) drehmomentübertragend verbunden ist, und wobei die mit der Steuerung signalübertragend verbundene Drehwinkelsensoranordnung (6) zur Bestimmung eines Drehwinkels der mit dem Lenkrad (4) drehfest und mit dem Lenkradaktor drehmomentübertragend verbundenen Welle (8) bei einer Drehung der Welle (8) um eine Drehachse (10) der Welle (8) ferner einen mit der Welle (8) drehfest verbundenen Drehwinkelgeber (20) und einen zu dem Drehwinkelgeber (20) korrespondierenden Drehwinkelsensor zur Erfassung von Drehungen der Welle (8) um die Drehachse (10) in einem Drehwinkelbereich von unter -/+ 360° aufweist, wobei der Drehwinkelgeber (20) und der Drehwinkelsensor zusätzlich zur Erfassung der Drehposition des Außenläufers des Elektromotors relativ zu der starren Lenksäule ausgebildet sind.

2. Lenksystem (2) nach Anspruch 1, **dadurch gekennzeichnet, dass** die Drehwinkelsensoranordnung (6) zur Bestimmung von einer Mehrzahl von 360°-Umdrehungen einer Welle (8) ausgebildet ist, wobei die Welle (8) in einem Drehwinkelbereich von -n*360° bis +n*360° um die Drehachse (10) der Welle (8) drehbar ist und das Getriebe (18) gleichzeitig bei einem Drehwinkel von - n*360° und bei einem Drehwinkel von +n*360° jeweils einen der festen mechanischen Anschläge der Welle (8) ausbildet.

3. Lenksystem (2) nach Anspruch 1 oder 2,
**dadurch gekennzeichnet,**
**dass** das erste Getriebeteil (16) als ein integraler Bestandteil der Welle (8) ausgebildet ist, bevorzugt, dass das erste Getriebeteil (16) als eine gewindeartige Nut in der Welle (8) und das zweite Getriebeteil (12) als ein in der gewindeartigen Nut geführter Nutenstein ausgebildet sind.

4. Lenksystem (2) nach einem der Ansprüche 1 bis 3,
**dadurch gekennzeichnet,**
**dass** der Drehwinkelgeber (20) an einer freien Stirnseite der Welle (8) angeordnet ist, bevorzugt, dass der Drehwinkelgeber (20) als ein integraler Bestandteil der Welle (8) ausgebildet ist.

5. Lenksystem (2) nach Anspruch 4,
**dadurch gekennzeichnet,**
**dass** der Drehwinkelgeber und der Drehwinkelsensor zusätzlich zur Erfassung von Drehungen der Welle um die Drehachse in einem Drehwinkelbereich von größer -/+ 360°, bevorzugt von -/+ n*360°, geeignet ausgebildet sind.

6. Lenksystem (2) nach einem der Ansprüche 1 bis 5,
**dadurch gekennzeichnet,**
**dass** der Umdrehungssensor (14) und/oder der Drehwinkelsensor jeweils als ein induktiver Sensor ausgebildet sind/ist, bevorzugt, dass der Umdrehungssensor (14) und/oder der Drehwinkelsensor jeweils eine Messfrequenz von größer 1 MHz aufweisen/aufweist.

7. Lenksystem (2) nach einem der Ansprüche 1 bis 6,
**dadurch gekennzeichnet,**
**dass** die Erfassung der Drehposition auf eine Polpaar-Teilung des Elektromotors abgestimmt ausgebildet und eingerichtet ist.

8. Lenksystem nach einem der Ansprüche 1 bis 7,
**dadurch gekennzeichnet,**
**dass** der Drehwinkelsensor auf einer an der Lenksäule befestigten Leiterplatte angeordnet ist und die Welle mit dem Drehwinkelgeber durch eine Öffnung in der Leiterplatte hindurchragt.

## Claims

1. Steering system (2) for a motor vehicle, comprising a rigid steering column, a controller, a steering wheel (4) arranged rotatably on the steering column by means of a shaft (8), and a rotation angle sensor arrangement (6) connected to the controller in a signal-transmitting manner for determining a rotation angle of the shaft (8) when the shaft (8) rotates about a rotation axis (10) of the shaft (8), wherein the rotation angle sensor arrangement (6) comprises a rotation encoder (12) connected to the shaft (8) in a force-transmitting connection and a rotation sensor (14) for detecting a movement of the rotation encoder (12), wherein a first gear part (16) of a gear (18) of the rotation angle sensor arrangement (6) is arranged on the shaft (8) in a rotationally rigid manner and the rotation encoder (12) is designed as a second gear part of the gear (18) which is in engagement with the first gear part (16), wherein the gear (18) simultaneously forms a fixed mechanical stop of the shaft (8) at a first end of a rotation angle range of the shaft (8) when the shaft (8) rotates in anti-clockwise direction and at a second end of the rotation angle range of the shaft (8) when the shaft (8) rotates in clockwise direction,
**characterised in that**
the steering wheel (4) is arranged rotatably on the steering column by means of a steering wheel actuator and the shaft (8), wherein the steering wheel actuator that is connected to the controller in a signal-transmitting manner and has an external rotor electric motor, is rigidly fixed to the steering column and connected to the steering wheel (4) in a torque-transmitting manner by means of the shaft (8), wherein the rotation angle sensor arrangement (6) that is connected to the controller in a signal-transmitting manner is used to determine an angle of rotation of the shaft (8) that is connected to the steering wheel (4) in a rotationally rigid manner and to the steering wheel actuator in a torque-transmitting manner when the shaft (8) is rotated about an axis of rotation (10) of the shaft (8), and further comprises a rotation angle encoder (20) connected to the shaft (8) in a rotationally rigid manner and a rotation angle sensor corresponding to the rotation angle encoder (20) for detecting rotations of the shaft (8) about the axis of rotation (10) in a rotation angle range of less than -/+ 360°, said rotation angle encoder (20) and said rotation angle sensor additionally being designed to detect the rotational position of the external rotor of the electric motor relative to the rigid steering column.

2. Steering system (2) according to claim 1,
**characterised in that**
the rotation angle sensor arrangement (6) is designed to determine a plurality of 360° rotations of a shaft (8), said shaft (8) being rotatable about the axis of rotation (10) of the shaft (8) in a rotation angle range from -n*360° to +n*360°, and the gear (18) simultaneously forming one of the fixed mechanical stops of the shaft (8) at a rotation angle of -n*360° and at a rotation angle of +n*360°.

3. Steering system (2) according to claim 1 or 2,
**characterised in that**
the first gear part (16) is designed as an integral component of the shaft (8), preferably such that the first gear part (16) is designed as a thread-like groove in the shaft (8) and the second gear part (12) is designed as a sliding block guided in the thread-like groove.

4. Steering system (2) according to one of claims 1 to 3,
**characterised in that**
the rotation angle sensor (20) is arranged on a free end face of the shaft (8), preferably such that the rotation angle sensor (20) is designed as an integral component of the shaft (8).

5. Steering system (2) according to claim 4,
**characterised in that**
the rotation angle encoder and the rotation angle sensor are additionally suitably designed to detect rotations of the shaft about the axis of rotation in a rotation angle range of greater than -/+ 360°, preferably of -/+ n*360°.

6. Steering system (2) according to one of claims 1 to 5,
**characterised in that**
the rotation sensor (14) and/or the rotation angle sensor is/are each designed as an inductive sensor, preferably such that the rotation sensor (14) and/or rotation angle sensor each has/have a measuring frequency of greater than 1 MHz.

7. Steering system (2) according to one of claims 1 to 6,
**characterised in that**
the detection of the rotational position is designed and set up to match the pitch of a pole pair of the electric motor.

8. Steering system according to any one of claims 1 to 7,
**characterised in that**
the rotation angle sensor is arranged on a printed circuit board attached to the steering column and the shaft with the rotation angle encoder protrudes through an opening in the printed circuit board.

## Revendications

1. Système de direction (2) pour un véhicule comprenant une colonne de direction rigide, une commande, un volant de direction (4) disposé de manière à pouvoir tourner sur la colonne de direction au moyen d'un arbre (8) et un agencement de capteurs d'angle de rotation (6) relié à la commande de manière à transmettre des signaux afin de déterminer un angle de rotation de l'arbre (8) lors d'une rotation de l'arbre (8) autour d'un axe de rotation (10) de l'arbre (8), l'agencement de capteurs d'angle de rotation (6) comprenant un transmetteur de rotation (12) en liaison de transmission de force avec l'arbre (8) et un capteur de rotation (14) pour la détection d'un mouvement du transmetteur de rotation (12) et une première partie d'engrenage (16), disposée de manière à résister à la rotation, d'un engrenage (18) de l'ensemble de capteurs d'angle de rotation (6) étant disposée sur l'arbre (8) et le transmetteur de rotation (12) étant réalisé sous la forme d'une deuxième partie d'engrenage de l'engrenage (18) se trouvant en prise avec la première partie d'engrenage (16), l'engrenage (18) formant simultanément une butée mécanique fixe de l'arbre (8) à une première extrémité d'une plage d'angles de rotation de l'arbre (8) lors d'une rotation de l'arbre (8) dans le sens inverse des aiguilles d'une montre et à une deuxième extrémité de la plage d'angles de rotation de l'arbre (8) lors d'une rotation de l'arbre (8) dans le sens des aiguilles d'une montre,
**caractérisé en ce que**
le volant de direction (4) est disposé sur la colonne de direction au moyen d'un actionneur de volant de direction et de l'arbre (8) de manière à pouvoir tourner, l'actionneur de volant de direction relié à la commande de manière à transmettre des signaux et doté d'un moteur électrique à rotor extérieur étant fixé de manière rigide sur la colonne de direction et étant relié au volant de direction (4) au moyen de l'arbre (8) de manière à transmettre un couple de rotation, et l'agencement de capteurs d'angle de rotation (6) relié à la commande de manière à transmettre des signaux servant à déterminer un angle de rotation de l'arbre (8) relié au volant (4) de manière fixe et à l'actionneur de volant de direction de manière à transmettre le couple lors d'une rotation de l'arbre (8) autour d'un axe de rotation (10), comportant en outre un transmetteur d'angle de rotation (20) relié à l'arbre (8) et un capteur d'angle de rotation correspondant au transmetteur d'angle de rotation (20) pour détecter des rotations de l'arbre (8) autour de l'axe de rotation (10) dans une plage d'angles de rotation inférieure à -/+ 360°, le transmetteur d'angle de rotation (20) et le capteur d'angle de rotation étant en outre conçus pour détecter la position de rotation du rotor extérieur du moteur électrique par rapport à la colonne de direction rigide.

2. Système de direction (2) selon la revendication 1
**caractérisé en ce que**
l'agencement de capteurs d'angle de rotation (6) est conçu pour déterminer plusieurs rotations de 360° d'un arbre (8), l'arbre (8) pouvant tourner dans une plage d'angles de rotation de -n*360° à +n*360° autour de l'axe de rotation (10) de l'arbre (8) et l'engrenage (18) formant simultanément l'une des butées mécaniques fixes respectives de l'arbre (8) à un angle de rotation de -n*360° et à un angle de rotation de +n*360°.

3. Système de direction (2) selon la revendication 1 ou 2
**caractérisé en ce que**
la première partie d'engrenage (16) est conçue comme une partie intégrante de l'arbre (8), de préférence **en ce que** la première partie d'engrenage (16) est conçue comme une rainure de type filetage dans l'arbre (8) et la deuxième partie d'engrenage (12) est conçue comme un coulisseau guidé dans la rainure de type filetage.

4. Système de direction (2) selon l'une des revendications 1 à 3
**caractérisé en ce que**
le transmetteur d'angle de rotation (20) est disposé sur une face frontale libre de l'arbre (8), de préférence **en ce que** le transmetteur d'angle de rotation (20) est conçu comme une partie intégrante de l'arbre (8).

5. Système de direction (2) selon la revendication 4
**caractérisé en ce que**
le transmetteur d'angle de rotation et le capteur d'angle de rotation sont réalisés de manière appropriée pour détecter en outre des rotations de l'arbre autour de l'axe de rotation dans une plage d'angles de rotation supérieure à -/+ 360°, de préférence de -/+ n*360°.

6. Système de direction (2) selon l'une des revendications 1 à 5
**caractérisé en ce que**
le capteur de rotation (14) et/ou le capteur d'angle de rotation sont/est respectivement conçus comme un capteur inductif, de préférence **en ce que** le capteur de rotation (14) et/ou le capteur d'angle de rotation présente(nt) respectivement une fréquence de mesure supérieure à 1 MHz.

7. Système de direction (2) selon l'une des revendications 1 à 6
**caractérisé en ce que**
la détection de la position de rotation est réalisée et agencée de manière adaptée à une division par paires de pôles du moteur électrique.

8. Système de direction selon l'une des revendications 1 à 7
**caractérisé en ce que**
le capteur d'angle de rotation est disposé sur une carte de circuit imprimé fixée à la colonne de direction et **en ce que** l'arbre avec le transmetteur d'angle de rotation fait saillie à travers une ouverture dans la carte de circuit imprimé.
